# EUROPEAN PATENT APPLICATION

(11) **EP 3 754 823 A1**
(43) Date of publication of application: **23.12.2020**
(21) Application number: 19382511.4
(22) Date of filing: 19.06.2019
(51) Int. Cl.: H02K 16/04, H02K 1/18, H02K 1/22, H02K 1/26, H02K 1/27, H02K 7/18

(54) **HIGH-EFFICIENCY COMPACT ELECTRIC GENERATOR FOR WIND TURBINE FARMS**

(71) Applicant: BioCoRe S. Coop., 28011 Madrid (ES)
(72) Inventor: Martínez González, Ruben, 28011 Madrid (ES); Jiménez Pantoja, Emilio, 28011 Madrid (ES); Domingo Serrano, Javier, 28011 Madrid (ES)
(74) Representative: Pérez Crespo, Eduardo

(57) **Abstract**

The present invention provides an electric energy generator (10) comprising a rotor (14) and a stator, which has two inductive current picking systems (32,34). The rotor (14) is of a cylindrical shape with a hollow interior and comprising a cylindrical structure upon which there are mounted an even number of magnets (26) with their poles facing the hollow interior. The magnets (26) are distributed at quasi-uniform angular spaces around the cylindrical structure and arranged such that one magnet (26) is located between two magnets (26) arranged in opposite polarity so that the magnetic flux created goes from one magnet to its adjacent magnets (26). The stator comprises two inductive current picking systems (32,34): a main inductive current picking system (32) which generates electricity mainly from the radial portion of the magnetic field and a secondary inductive current picking system (34) arranged and configured to pick inductive currents induced at least partly by an axial portion of the magnetic field. The secondary inductive current picking system (34) exhibits zero or near-zero counter-electromotive force and can be selectively switched on or off. This compact generator (10) with selective control over the secondary inductive current picking system that picks inductive currents induced by an axial portion of the magnetic field is especially suitable for renewable energy generation systems, such as windfarms, tidal energy generation systems, etc.

## Description

### Technical field

The present invention belongs to the technical field of apparatuses suitable for generating electric energy from kinetic energy. In particular, but not limited to this, the present invention provides a compact electric generator with special applicability to renewable energy turbines manufacturing, such as wind turbines. Notwithstanding, this apparatus can also be used in other applications than wind turbines, for example tidal turbines.

### Background of the invention

There is a pressing need for more and better energy services to allow economic development and ensure clean energy production with low carbon emissions. The speed and scale of this change is unprecedented, driven by rapid population growth, urbanization and economic development. At the same time, the current energy model, mainly based on the massive use of fossil fuels after the industrial revolution, poses major threats to the environment largely contributing to the actual climate change and environmental crisis. This has led to a release of an overwhelming amount of greenhouse gases to the atmosphere (since 1970, CO₂ emissions have increased by about 90%) that has driven the current global climatic change. Global side effects include pollution, land degradation, increase in forest fires and water scarcity. Globally, climate change creates an increased risk of extreme weather events such as floods, heat waves and drought, as well as irreversible changes to the environment, such as sea level rise, forest loss and ocean acidification. The U.S. Energy Information Administration's International Energy Outlook of 2017 projects that world energy consumption will grow by 28% between 2015 and 2040.

The main goal of the Paris Agreement on Climate Change (COP21) is keeping the global temperature rise below 2 °C above pre-industrial levels, as well as to pursue efforts to limit the temperature increase even further to 1.5 °C. In this context, the EU and other big economies are promoting the development of alternative and more efficient energy-generating technologies, being one of the priorities of the EU policies: the EU's Renewable energy directive sets a binding target of 20% final energy consumption from renewable sources by 2020 and the EU energy 2030 strategy sets a target of at least 32% by 2030. Hence, the development of novel disruptive technologies in clean energy generation is of paramount importance.

In state-of-the-art electric generators, their active power is reduced as a result of the reactive power of the charges, which in turn, depends of the quality of the inductive charge. Thus, the active power could even fall below 50% of the generator's total power.

The apparent or total power of a generator is made up of two powers, an active or useful power, *W,* and a reactive or, in principle, useless power, *Var.*

In current generating systems, using sinusoidal alternating current, the active power equals the voltage times the current intensity and the cosine of the angle between the voltage and the intensity, *Cos φ*, which is named the power factor.

The power factor can adopt values between 0 and 1. It is 0 when the out-of-phase angle between the current and the voltage is 90° and it is 1 when the out-of-phase angle between the voltage and the current is 0°.

The out-of-phase angle is 90° when the inductive charges are ideal, in which case the active power would be 0 because the power factor *Cos φ* has a 0 value.

If the power factor is calculated as the ratio between the active power W and the total or apparent power, *VA,* the same conclusion is reached, i.e. the same reasoning is applicable when the currents are not sinusoidal or the charges are not lineal and thus the power factor would be different than *Cos φ.*

In all cases it is conceivable that the active power is 0 for a certain value of the inductive charges. Nevertheless, it would be desirable to design an electric generator wherein the reactive power is minimised or at least that it can be adjusted or modified at will, so as to increase the energy efficiency of electric turbines and/or renewable energy systems than incorporate such electric generator versus the current technology.

### Summary of the invention

According to a first aspect of the invention there is here provided an apparatus for generating electric energy from kinetic energy, the apparatus comprising:
- a rotor, the rotor being of a cylindrical shape with a hollow interior, the rotor comprising a cylindrical structure upon which there are mounted an even number of magnetic ensembles comprising poles facing the hollow interior, the magnetic ensembles being distributed at quasi-uniform angular spaces around the cylindrical structure and arranged such that one magnetic ensemble is located between two magnetic ensembles arranged in opposite polarity so that the magnetic flux created by the magnetic ensembles goes from one magnetic ensemble to its adjacent magnetic ensembles;
- a stator located in the rotor hollow interior, the stator comprising two inductive current picking systems:
   ∘ a main inductive current picking system arranged and configured to pick inductive currents induced by a first portion of a magnetic field created by the magnetic ensembles, the first portion of the magnetic field extending in a radial direction towards the hollow interior of the rotor, in use; and
   ∘ a secondary inductive current picking system arranged and configured to pick inductive currents induced at least partly by a second portion of a magnetic field created by the magnetic ensembles, the second portion of the magnetic field extending at least partly in an axial direction along the rotor, in use.

An apparatus as described above, thanks to the secondary inductive current picking system, is able to generate an additional amount of electric energy from a given kinetic energy input because it makes profit of at least part of the axial magnetic flux created by the magnetic ensembles and transforms it into electric current.

The main inductive current picking system may comprise a ferromagnetic ring frame anchored to a static longitudinal axis passing along the ring frame centre; wherein the ferromagnetic ring frame may be concentrically arranged with respect to the rotor and may comprise a series of radially outwardly extending protrusions upon its perimeter which extend until close proximity with the magnetic ensembles.

The number of protrusions may be twice the number of magnetic ensembles.

The main inductive current picking system may comprise two or three picking coils alternatively wound in sinusoidal fashion around the protrusions and surrounding the ring frame such that the protrusions and the ring act as ferromagnetic cores. In this way, the electrical current generated may be biphasic or triphasic.

The secondary inductive current picking system may comprise a ferromagnetic core configured to direct the magnetic flux from one end of a magnetic ensemble to the opposite end of an adjacent magnetic ensemble, in use, through the circular gap defined by the ferromagnetic ring frame of the main inductive current picking system.

The secondary inductive current picking system may comprise an inductive current picking coil which is concentrically arranged with respect to the ferromagnetic ring frame of the main inductive current picking system and the magnetic core of the secondary inductive current picking system may extend through the inductive current picking coil of the secondary inductive current picking system.

In this way, the apparatus achieves a higher energy generation per volume due to this compact design when compared with other state-of-the-art generators. In this way, given a space availability in a wind turbine, the apparatus can generate more power than conventional state-of-the-art generators which enables the use of lower wind turbines or smaller blades for a given power generation requirement and therefore, the overall cost of a wind fam can be significantly reduced.

The ferromagnetic core of the secondary inductive current picking system may comprise ends which extend perpendicularly towards the stator axis from the pole longitudinal ends of the magnetic ensembles. The pole longitudinal ends of a magnetic ensemble are the ends along its longer dimension at a pole of a magnetic ensemble. In this way, the secondary inductive current picking system generates energy while creating a minimum amount of counter-electromotive force and thus the energy efficiency of the apparatus increases.

The secondary inductive current picking system may be associated with a number of charges which can be selectively activated in order to regulate at will the counter-electromotive force and the energy efficiency of the apparatus. In this way, it is possible to supress or at least reduce the counter-electromotive force by selectively switching on or off a combination of reactive, capacitive or inductive charges, either in series, parallel or in different combinations, and adapt the current power factor to the current rotational speed of the rotor, so that power generation can be maximised, or modified at will.

The quasi-uniform angular distribution of the magnetic ensembles may be asymmetrical with respect of the angular distribution of the ends of the ferromagnetic core, such that when two ends, one at each side of the secondary inductive current picking system are in perfect angular alignment with two consecutive magnetic ensembles, one at each side of the secondary inductive current picking system, none of the remaining magnetic ensembles are in perfect alignment with the remaining ends of the magnetic core, but they are gradually increasingly slightly misaligned. In this way, the secondary inductive current picking system generates energy while the energy required to start the apparatus rotation from a rest position (also known as cogging) is substantially reduced or nearly cero. This is quite convenient for wind turbines, as they would be able to start their operation at significantly lower wind speeds than wind turbines with conventionally arranged generators.

In use, an electrical current extracted by the secondary inductive current picking system may be selectively regulated or switched on or off. By having the option of regulating or deactivating the secondary inductive current picking system, it is possible to control and regulate the amount of energy generated with respect of the reactive power consumed. This is especially useful in facilities with a large amount of electric energy generating apparatuses, such as in wind farms.

The secondary inductive current picking system magnetic core may comprise a plurality of sheets or plates stacked upon each other. In this way, the magnetic core exhibits reduced energy dissipation by hysteresis and/or eddy currents. Likewise, the ferromagnetic ring frame may comprise a plurality of sheets or plates piled or stacked on top of each other, so as to reduce energy losses by hysteresis and/or eddy currents.

The magnetic ensembles may comprise at least two magnetic units defining a gap between them. The magnetic ensembles with this design allow a better focusing of the magnetic field towards the main inductive current picking system.

The magnetic ensembles may comprise permanent magnets. Alternatively or additionally, the magnetic ensembles may comprise electromagnets.

Suitably the permanent magnets may comprise neodymium magnets which are the strongest permanent magnets known to date.

### Brief description of the drawings

A preferred embodiment of the present invention will now be further described in the following paragraphs of this specification, by means of example only, without intending to constitute any limitation of the scope of the present invention. The following description may be better understood when read in conjunction with the attached drawings, in which:
Figure 1 shows an external perspective view of an apparatus according to the present invention
Figure 2 shows an external perspective view of an apparatus according to the present invention wherein its interior is partially visible.
Figure 3 shows a schematic diagram of the magnetic flux when the apparatus is in use.
Figure 4 shows a transversal sectional view of the interior of the apparatus.
Figure 5 shows an axial sectional view of the interior of the apparatus.
Figure 6 shows a view of the main inductive current picking system.
Figure 7 shows a comparative graphic between the performance of the apparatus of Figure 1 and a state-of-the-art Enair™ generator.
Figure 8 shows the wind speed distribution in Sotavento, a wind farm located near Xermade, a town in the region of Galicia in Spain.
Figure 9 shows the energy efficiency comparison when the wind speed distribution of Figure 8 is applied to the performance trends of Figure 7 for both generators.

### Detailed description of the invention

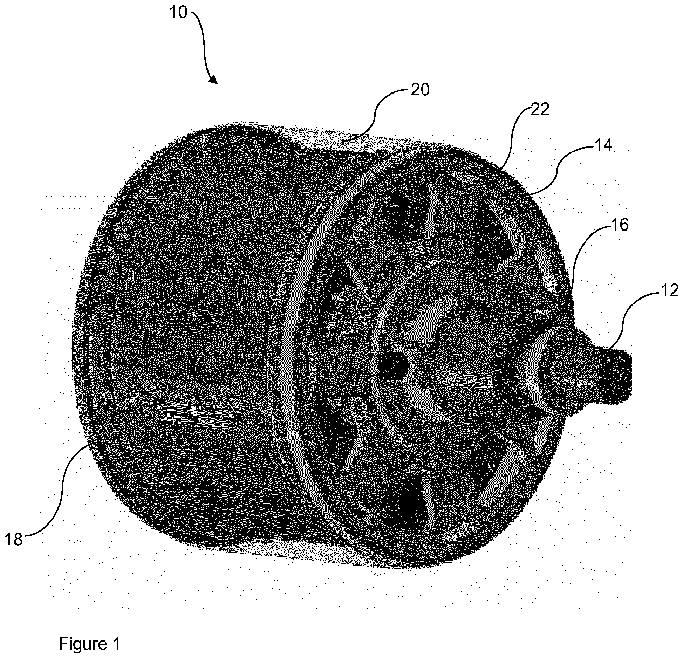

Figure 1 shows a perspective view of the exterior of an embodiment of the present invention. The apparatus 10 comprises a stationary axis 12 upon which the rotor unit 14 is mounted, which is supported by bearings 16 onto the stationary axis 12.

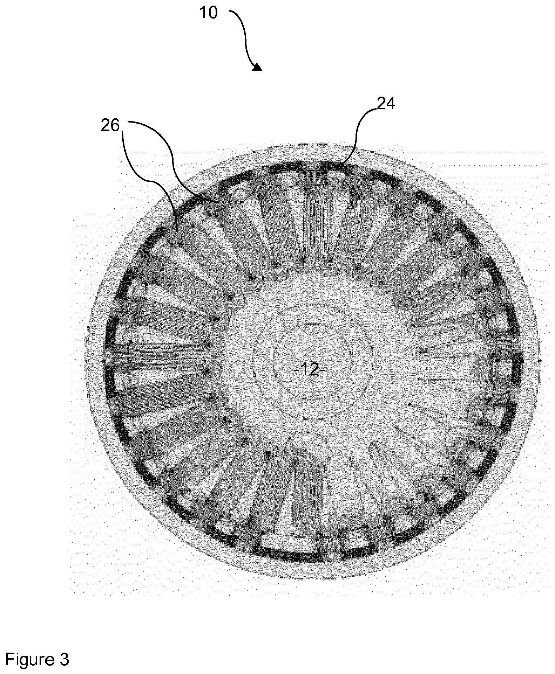

The rotor unit 14 comprises a housing 18 which comprises a cylindrical sheet 20 and one rim 22 at each end of the cylindrical sheet 20. Inside the housing 18, the rotor unit 14 comprises a cylindrical structure 24 upon which there are mounted twenty-four magnetic ensembles 26. Each magnetic ensemble 26 comprises two aligned portions of neodymium permanent magnets 28. The magnetic ensembles 26 are distributed at quasi-uniform angular spaces around the cylindrical structure 24 and arranged such that one magnetic ensemble is located between two magnetic ensembles arranged in opposite polarity so that the magnetic flux created by the magnetic ensembles 26 travels from one magnetic ensemble to its adjacent magnetic ensembles. This is better observed at Figure 3.

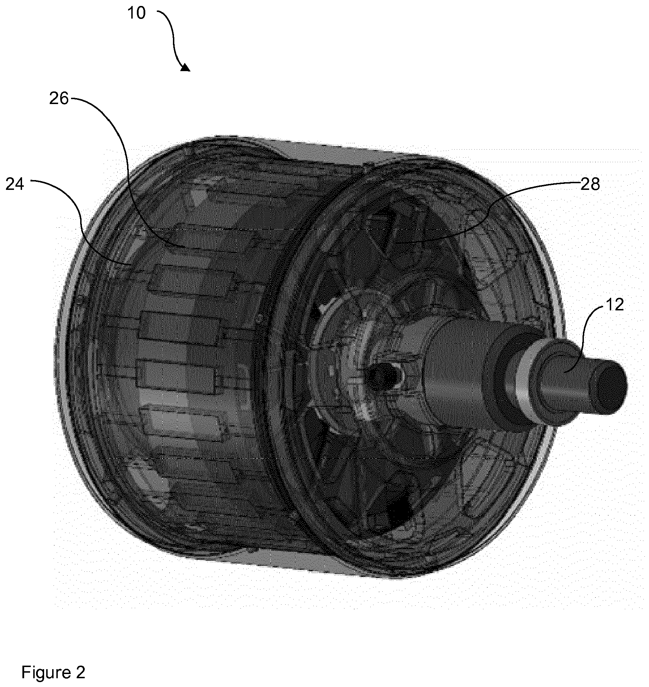

Figure 2 shows that the stator 28 is located in the rotor hollow interior.

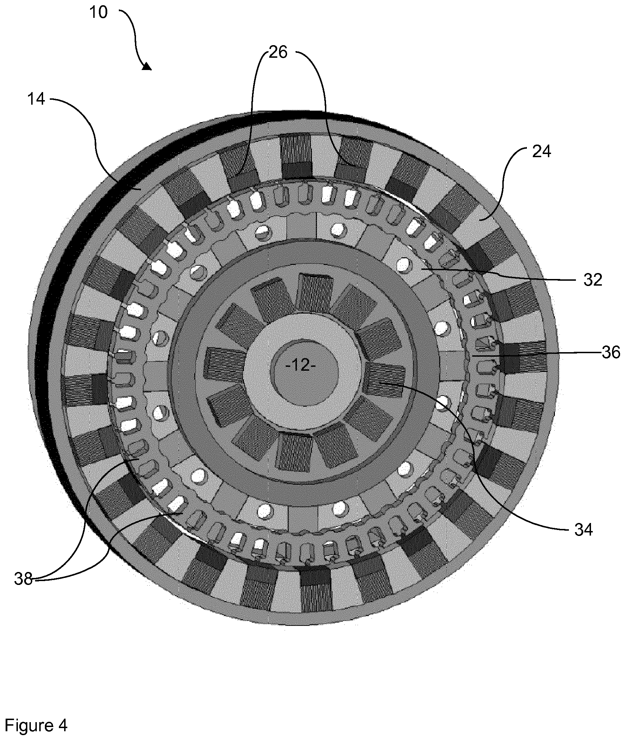

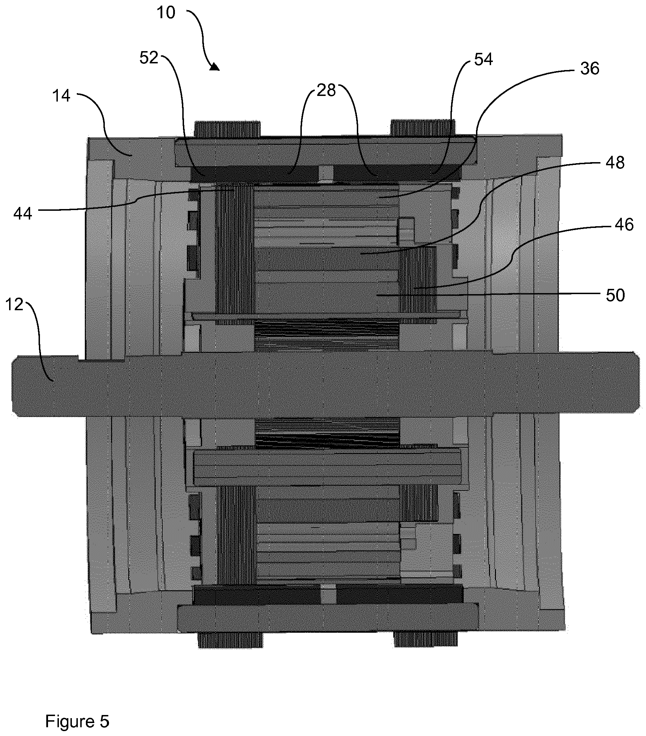

Figures 4 and 5 show that the stator 28 comprises two inductive current picking systems. Namely, a main inductive current picking system 32 and a secondary inductive current picking system 34.

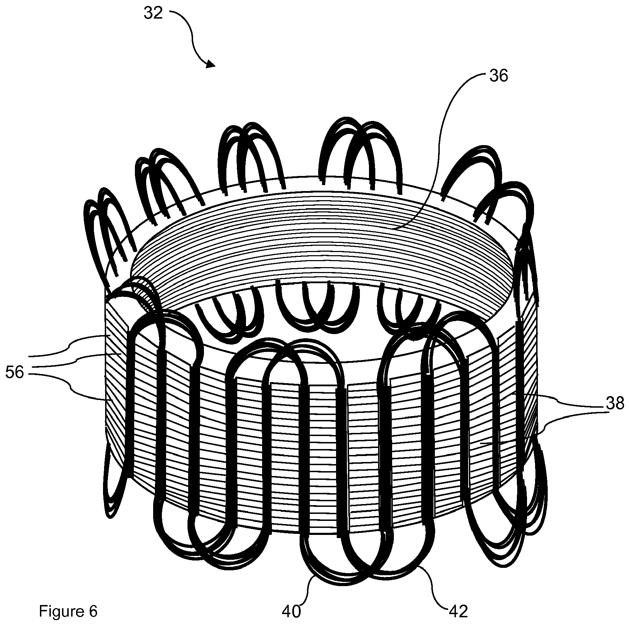

The main inductive current picking system 32 comprises a ferromagnetic ring frame 36 anchored to the static longitudinal axis 12 that passes along the ferromagnetic ring frame 36 centre. The ferromagnetic ring frame 36 is arranged concentrically with respect to the rotor 14 and comprises a series of radially outwardly extending protrusions 38 upon its perimeter which extend until close proximity with the magnetic ensembles 26 of the rotor unit 14. There are forty-eight protrusions 38, which is twice the number of magnetic ensembles 26. The stator 28 comprises two picking coils 40, 42 (shown in Figure 6) which are alternatively wound in sinusoidal fashion around the protrusions 38 and surrounding the ring frame 36 such that the protrusions 38 and the ring frame 36 can act as magnetic cores in use, picking up the variable magnetic flux of the magnetic ensembles 26 upon their rotation and inducing an alternating electric current in the two picking coils 40, 42 (shown in Figure 6).

The secondary inductive current picking system 34 can be more clearly seen in Figure 5. It is arranged and configured to pick inductive currents induced at least partly by an axial portion of a magnetic field created by the magnetic ensembles 26.

An apparatus 10 described herein, thanks to the secondary inductive current picking system 34, is able to generate an additional amount of electric energy from a given kinetic energy input because it makes profit of at least part of the axial magnetic flux created by the magnetic ensembles 26 and transforms it into electric current.

Additionally, the secondary inductive current picking system is associated with a combination of reactive, capacitive or inductive charges, either in series, parallel or in different combinations of series and parallel arrangements so that they can be selectively activated in order to regulate at will the counter-electromotive force and the energy efficiency of the apparatus. In this way, it is possible to supress or at least reduce the counter-electromotive force by selectively switching on or off several combinations of reactive, capacitive or inductive charges, either in series, parallel or in different combinations, and adapt the current power factor to the current rotational speed of the rotor, so that power generation can be maximised, or modified at will.

This apparatus 10 for electric energy generation from kinetic energy is able to deliver 23% more energy than other available similar generators. The existing generators work with electromagnets, coupled to ferromagnetic cores, which are placed in a cylinder around the apparatus axis. This apparatus 10 comprises an additional ferromagnetic core 50 which partially extends perpendicularly to the apparatus axis 12 and which can be regulated, activated or deactivated voluntarily, by a switch and/or by applying charges, thus allowing to change the useful electromagnetic flux inside the apparatus 10, and therefore it is possible to adjust at will the amount of power generated depending on the actual needs. This feature enables a series of possibilities and advantages:
1. This apparatus 10 can produce substantially more energy (23% more) than other competing similar generators, thanks to the possibility to partially or completely cancel reactive power (useless) transforming all active power (for example wind power) into apparent power (electricity). In the following example there is a comparison with a conventional generator and our generator is able to produce 23% more energy at the same wind conditions.
2. An great amount of the axial magnetic field variations can be selectively collected by the secondary current picking system and applied back to the rotor 14, for example, to support the movement of the blades if applied to a wind turbine. This way, in situations of low wind speeds (<3.6 m/s) where other wind turbines are unable to operate (with the economic losses involved). This apparatus 10 can continue to operate and produce energy, decreasing the OPEX. For example, at low wind speeds and low rotational speeds the amount of energy extracted from the secondary current picking system is low, it is possible to reduce or completely cancel the amount of energy extracted from the secondary system so as to increase the rotational speed of the rotor to a desired level. This gives a certain amount of flexibility to operate wind turbines at low wind speeds.
3. Thanks to the production of around 23% more energy, customers can implement lower towers or smaller blades can be designed, without reducing the amount of energy produced, so reducing the CAPEX.
4. Thanks to the modularity in the design of perpendicular magnetic cores 44, 46, this apparatus 10 can be manufactured to meet different size/power requirements. The apparatus can be made larger either by increasing its diameter, or more easily, thanks to its extendable arrangement, it can be made longer along the apparatus axis 12, by simply adding longer magnetic ensembles and stacking more plates in the ferromagnetic cores.

The secondary inductive current picking system 34 comprises a magnetic core 50 configured to direct the magnetic flux from one end of a magnetic ensemble to the opposite end of an adjacent magnetic ensemble, in use, thus, through the circular gap defined by the ferromagnetic ring frame 36 of the main inductive current picking system 32.

The secondary inductive current picking system 34 comprises an inductive current picking ring coil 48 arranged concentrically with respect to the metallic ring frame 36 of the main inductive current picking system 32 and the magnetic core 50 is arranged and configured to direct the magnetic flux from one end of a magnetic ensemble to the opposite end of an adjacent magnetic ensemble, in use, through the circular gap defined by the inductive current picking ring coil 48 of the secondary inductive current picking system 32.

In this way, the apparatus 10 achieves a higher energy generation per volume due to this compact design when compared with other state-of-the-art generators. This is very useful for renewal energy generation systems which are often located in remote places and therefore a reduced apparatus volume is always beneficial.

The magnetic core 50 of the secondary inductive current picking system 36 comprises ends or portions thereof 44, 46 which extend perpendicularly towards the stator axis 12 from the pole axial ends 52, 54 of the magnetic ensembles 26. There is an equal number of magnetic core ends or portions 44, 46 in each side of the secondary inductive current picking system 36 than the number of magnetic ensembles 26, as can be seen in Figure 3. However, the quasi-uniform angular distribution of the magnetic ensembles 26 is asymmetrical with respect of the angular distribution of the ends 44, 46 of the magnetic core 50, such that when two ends 44, 46, one at each side of the secondary inductive current picking system 36, are in perfect angular alignment with two consecutive magnetic ensembles 26, one at each side of the secondary inductive current picking system 36, none of the remaining magnetic ensembles 26 are in perfect alignment with the remaining ends 44, 46 of the magnetic core 50, but they are gradually increasingly slightly misaligned. In this way, the secondary inductive current picking system 36 generates energy while the energy required to start the apparatus rotation from a rest position is substantially reduced or nearly cero. This is quite convenient for wind turbine generators, as they would be able to start their operation at significantly lower wind speeds than wind turbines with conventionally arranged generators.

An electrical current extracted by the secondary inductive current picking system 34 may be selectively regulated or switched on or off.

The secondary inductive current picking system 34 magnetic core 50 comprises a plurality of ferromagnetic sheets or plates stacked or piled upon each other. In this way, the magnetic core 50 exhibits reduced energy dissipation by hysteresis and/or eddy currents when compared to a monolithic magnetic core. Likewise, the metallic ring frame 36, shown in Figure 6 in detail, comprises a plurality of ferromagnetic sheets or plates 56 piled or stacked on top of each other, so as to reduce energy losses by hysteresis and/or eddy currents.

### Example

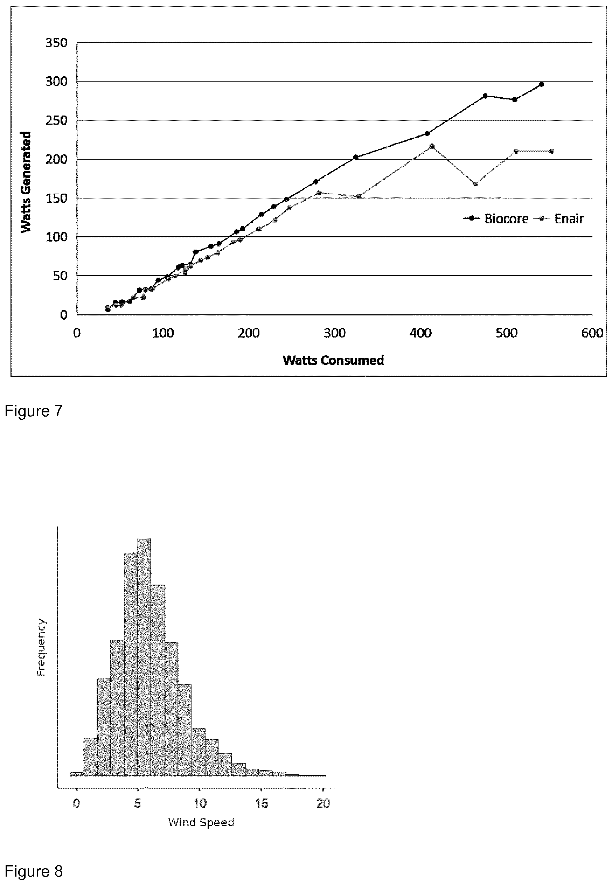

The graphic shown in Figure 7 depicts the relationship between the applied power to the generated power for a generator according to this invention and shown in previous Figures and a state-of-the-art 750 W generator made by Enair™. It can be seen that the generator according to this invention is more efficient, particularly at high applied power. The differences shown are statistically significant.

Figure 8 shows the wind speed distribution at Sotavento, a wind farm located near Xermade, which is a town in northwest Spain. This distribution embraces a time span of 2442 hours between February and June 2019. The power distribution per hour is represented in the histogram of Figure 8. The most frequent wind speeds are between 4 and 6 m/s. From the wind speed it is possible to calculate the wind power in Watts and the data points below 25 Watts, which is the minimum power required for the generator to work, are eliminated.

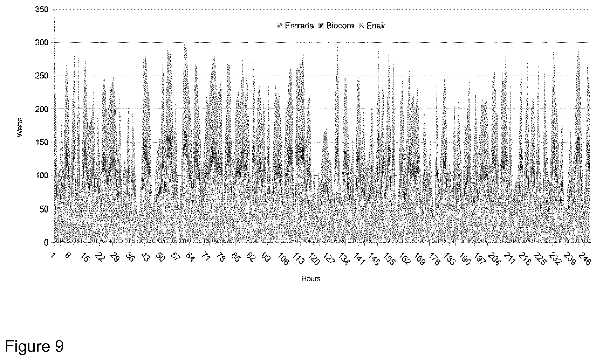

Once we have obtained the wind power data, we use linear regressions from the graph of Figure 7 to calculate the actual power output of each generator during this period of time. An example of the results obtained for a period of 250 hours is represented in Figure 9. Overall, calculating an integral sum of the power output over an extended period of time, the generator according to this invention produced 23% than the 750 Watts Enair™ state-of-the-art generator.

## Claims

1. An apparatus for generating electric energy from kinetic energy, the apparatus comprising:
- a rotor, the rotor being of a cylindrical shape with a hollow interior, the rotor comprising a cylindrical structure upon which there are mounted an even number of magnetic ensembles comprising poles facing the hollow interior, the magnetic ensembles being distributed at quasi-uniform angular spaces around the cylindrical structure and arranged such that one magnetic ensemble is located between two magnetic ensembles arranged in opposite polarity so that the magnetic flux created by the magnetic ensembles goes from one magnetic ensemble to its adjacent magnetic ensembles;
- a stator located in the rotor hollow interior, the stator comprising two inductive current picking systems:
∘ a main inductive current picking system arranged and configured to pick inductive currents induced by a first portion of a magnetic field created by the magnetic ensembles, the first portion of the magnetic field extending in a radial direction towards the hollow interior of the rotor, in use; and
∘ a secondary inductive current picking system arranged and configured to pick inductive currents induced at least partly by a second portion of a magnetic field created by the magnetic ensembles, the second portion of the magnetic field extending at least partly in an axial direction along the rotor, in use.

2. An apparatus according to claim 1 wherein the main inductive current picking system comprises a ferromagnetic ring frame anchored to a static longitudinal axis passing along the ferromagnetic ring frame centre; wherein the ferromagnetic ring frame is concentrically arranged with respect to the rotor and comprises a series of radially outwardly extending protrusions upon its perimeter which extend until close proximity to the magnetic ensembles.

3. An apparatus according to claim 2 wherein the number of protrusions is twice the number of magnetic ensembles.

4. An apparatus according to claim 3 wherein the main inductive current picking system comprises two or three picking coils alternatively wound in sinusoidal fashion around the protrusions and surrounding the ring frame such that the protrusions and the ring act as ferromagnetic cores.

5. An apparatus according to any of claims 2 to 4 wherein the secondary inductive current picking system comprises a ferromagnetic core configured to direct the magnetic flux from one end of a magnetic ensemble to the opposite end of an adjacent magnetic ensemble, in use, through in use, through the circular gap defined by the ferromagnetic ring frame of the main inductive current picking system.

6. An apparatus according to any of claims 2 to 5 wherein the secondary inductive current picking system comprises an inductive current picking coil which is concentrically arranged with respect to the ferromagnetic ring frame of the main inductive current picking system and wherein the ferromagnetic core of the secondary inductive current picking system extends through the circular gap defined by the inductive current picking coil of the secondary inductive current picking system.

7. An apparatus according to any of claims 5 or 6 wherein the ferromagnetic core of the secondary inductive current picking system comprises ends which extend perpendicularly towards the stator axis from the pole longitudinal ends of the magnetic ensembles.

8. An apparatus according to claim 7 wherein the quasi-uniform angular distribution of the magnetic ensembles is asymmetrical with respect of the angular distribution of the ends of the ferromagnetic core, such that when two ends, one at each side of the secondary inductive current picking system, are in perfect angular alignment with two consecutive magnetic ensembles, one at each side of the secondary inductive current picking system, none of the remaining magnetic ensembles are in perfect alignment with the remaining ends of the magnetic core, but they are gradually increasingly slightly misaligned.

9. An apparatus according to any previous claims wherein the secondary inductive current picking system may be associated with a number of charges which can be selectively activated in order to regulate at will the counter-electromotive force and the energy efficiency of the apparatus

10. An apparatus according to any previous claims wherein an electrical current extracted by the secondary inductive current picking system is selectively regulated or switched on or off.

11. An apparatus according to any of claims 5 to 10 wherein the secondary inductive current picking system ferromagnetic core comprises a plurality of sheets or plates stacked on top of each other.

12. An apparatus according to any of claims 2 to 11 wherein the ferromagnetic ring frame comprises a plurality of sheets or plates piled or stacked on top of each other.

13. An apparatus according to any previous claims wherein the magnetic ensembles comprise at least two aligned magnetic units defining a gap between them.

14. An apparatus according to any previous claim wherein the magnetic ensembles comprise permanent magnets and/ or electromagnets.

15. An apparatus according to any pervious claim wherein the permanent magnets comprise neodymium magnets.
